# EUROPEAN PATENT APPLICATION

(11) **EP 4 765 597 A1**
(43) Date of publication of application: **24.06.2026**
(21) Application number: 24307276.6
(22) Date of filing: 23.12.2024
(51) Int. Cl.: H02K 15/50

(54) **EXTRACTION DEVICE FOR MAGNET EMBEDDED IN A ROTOR**

(71) Applicant: TOYOTA JIDOSHA KABUSHIKI KAISHA, Toyota-shi, Aichi-ken 471-8571 (JP)
(72) Inventor: PIRES, Tony, 1140 Brussels (BE); STORMS, Ward, 1140 Brussels (BE)
(74) Representative: Cabinet Beau de Loménie

(57) **Abstract**

An extraction device (9) for extracting a magnet (7) from a rotor (1), the magnet (1) being arranged in a slot (3) of the rotor (1), said slot (3) extending from an upper face (4) of the rotor (1) to a bottom face (5) of the rotor (1) and having a constant cross-section along a longitudinal direction (6), the device comprising
- a shell (8) defining a housing, said housing being configured to block a radial displacement of an outer surface (2) of the rotor (1) when the rotor (1) is arranged in the housing,
a needle (23) configured to be inserted in the slot (3) and to apply on the magnet (7) a force with a longitudinal component, said needle (23) being longitudinally movable between a starting position outside the housing and an extracting position inside the housing.

## Description

### BACKGROUND OF THE INVENTION

### 1. Field of the invention

The present disclosure relates to electric motors in automotive field and, more particularly, to magnets used in electric motors and recycling of said magnets.

### 2. Description of Related Art

Automotive electric motors are using permanent magnets made of rare earths such as Nd (Neodymium), Tb (Terbium) and/or Dy (Dysprosium). However, mining and rare earth extraction from ores have an important carbon footprint. Thus, it is desirable to recycle the magnets to reuse them. However, these magnets can be reused directly only if they are not damaged during the recycling process.

A magnet is typically embedded within resin in a slot of a rotor of the electric motor. The resin embedding provides integrity of the magnet and the rotor stack, the magnet being firmly attached to the rotor in the slot. In order to extract the magnet from the rotor for recycling, the rotor stack first undergoes a heat treatment to remove or soften, depending on the temperature and atmosphere, the magnet's embedding. After having removed, or at least softened, the magnet's embedding, the magnet can be removed from the slot easily by being pushed out from the slot.

However, the heat treatment significantly contributes to the carbon footprint as the entire mass of the rotor needs to be heated up to high temperatures. Moreover, the process of heating up and cooling down takes significant time, lowering the productivity of the recycling process.

Furthermore, at high temperature, carbon and oxygen coming from the magnet coating, embedding and/or oven atmosphere diffuse within the magnet. These impurities lower the magnet performance.

Alternatively, a known method for extracting the magnet from the slot includes, after the heat treatment, vibrating the rotor which makes the lamellae of the rotor stack disconnect and breaks the magnet at the same time. As a result, the fragmented magnets drop out from the remains of the rotor stack and can be collected.

The vibration method relies on breaking the magnet to separate said magnet from the rotor lamellae. This method does not allow reusing the magnet which is completely broken during the process. It is necessary to use a further step of the recycling process including pulverizing the recovered magnet parts, blend various feedstocks of magnet powders and/or virgin magnet powder, press and sinter them into a new magnet. These further steps are time and energy consuming and increase the carbon footprint of the recycling process. Moreover, chemical impurities such as carbon and oxygen remain and deteriorate the recycled magnet's performance.

The recycling method can further include a refining step to remove the impurities. During such a refining step, all rare earths are purified and separated to reach the initial quality of virgin materials. The rare earths obtained through the refining step are then reused using a usual process of magnet manufacturing. This recycling process provides magnets with a good performance but requires more processing such as a refining step, a separation step and starting a new magnet manufacturing process. This recycling process is therefore complex and has an important carbon footprint.

Consequently, the magnets included in the rotors are not always recycled because the dismantling from the rotor is typically not cost effective and magnets are lost within the steel recycling stream as impurity.

There is a need for a magnet extracting method with a low carbon footprint and allowing the magnet to be reused directly, i.e. without damaging the magnet during the extracting process. Moreover, there is a need for such a method which does not decrease the magnet's performance. There is a need for such a method which is easy to implement and not energy and/or time-consuming.

### SUMMARY

The invention aims to provide a recycling method having a low carbon footprint. The invention aims to extract a magnet from a rotor without damage. The invention aims to extract a magnet without lowering its performance. The invention aims to extract a magnet without heat treatment. The invention aims to extract a magnet without impurities.

In this respect, the present disclosure relates to an extraction device for extracting a magnet from a rotor, the magnet being arranged in a slot of the rotor, said slot extending between two opposite faces of the rotor, typically from an upper face of the rotor to a bottom face of the rotor, and having a constant cross-section along a longitudinal direction, the device comprising
- a shell defining a housing, said housing being configured to block a radial displacement of an outer surface of the rotor when the rotor is arranged in the housing,
- a needle configured to be inserted in the slot and to apply on the magnet a force with a longitudinal component, i.e. a non-zero longitudinal component, said needle being longitudinally movable between a starting position outside the housing and an extracting position inside the housing.

Thanks to these features, the magnet housed in the slot of a rotor can be easily extracted without damage. Indeed, by arranging the rotor in the housing with the needle in the starting position, a single movement of the needle from the starting position to the extracting position introduces the needle in the slot and pushes out the magnet from the slot.

Especially, as the magnet is embedded in resin, said magnet is firmly fixed in the slot of the rotor. Without heat treatment, the pressure on the magnet resulting from the force applied by the needle would deform the rotor and would lead to damage to both the rotor and the magnet. However, as the rotor is housed in the housing and the housing is configured to block a radial displacement of the outer surface of the rotor, the movement of the needle does not involve radial deformation of the rotor. Consequently, the slot in which the magnet is arranged keeps its cross-section longitudinally stable when the needle applies a force by moving from the starting position to the extracting position. Thus, the force applied by the needle to the magnet can break the adhesion of the magnet embedding in the slot without damaging the magnet nor the rotor. In other words, the housing of the shell supports the rotor stack in radial direction, to avoid rotor deformation during the magnet extraction. Consequently, the magnet can be pushed out from the slot without being damaged by radial deformations of the rotor.

Moreover, the extraction device according to the invention is easy to manufacture and only requires a needle to push the magnet outside of the rotor and a shell to maintain the rotor integrity while extracting the magnet. Especially, the extraction device according to the invention does not require an energy and time-consuming heat treatment to remove or soften the resin in which the magnet is embedded in the slot nor a complex process to restore the magnet performance. Indeed, thanks to this extraction device, the magnet can be reused directly, without further treatment and without lowering its performance.

In such an extraction device, the housing may be configured to block a radial displacement of an outer surface of the rotor when the rotor is arranged in the housing means that the housing fully or partially surround the rotor when the rotor is arranged in the housing, an inner surface of the shell defining the housing and being in contact or close proximity of the outer surface of the rotor such that when the needle is inserted into the slot, the rotor shape is radially maintained by the outer surface of the rotor bearing against the inner surface of the housing.

According to embodiments of the invention, the extraction device may have one or a plurality of the following features, alone or in a combination.

According to an embodiment, the needle has a cross-section along the longitudinal direction included in the cross section of the slot. In the present disclosure, a first element having a cross-section included or smaller, along a direction, in the cross-section of a second element, which therefore includes or is larger than the cross-section of the first element, means that the projection in a plane perpendicular to said direction of the largest cross-section of said first element can be included without interferences in the projection in said plane of the smallest cross-section of said second element.

The needle may have different sizes and shapes and can be selected based on the rotor stack height and magnet dimensions. According to different embodiments, the needle cross-section has a circular shape, a square shape or any other shape. Preferably, the needle cross section is configured to have the same shape as the slot. Preferably, the needle is configured to be longer than the rotor height.

Preferably, the needle cross section is configured to be larger than the magnet cross section. Thanks to such a needle cross-section, the needle applies the force for extracting the magnet on the whole end face of the magnet, ensuring a better magnet extraction without damage. Preferably, the needle cross section is configured to have the same shape as the magnet cross section.

According to an embodiment, the shell comprises an inner surface defining the housing, said inner surface being configured to surround circumferentially, at least partially surround and preferably fully surround, the outer surface of the rotor. The inner surface of the shell surrounding the outer surface of the rotor provides a housing which can efficiently maintain the outer surface of the rotor inside the housing and thus avoid radial movement of said outer surface of the rotor.

The inner surface of the shell defining the housing has a shape depending on the shape of the outer surface of the rotor to block any radial displacement of the outer surface of the rotor. For instance, if the outer surface of the rotor is circular, then the inner surface of the shell is preferably also circular to fit the outer surface of the rotor.

According to an embodiment, the inner surface of the shell defining the housing is radially in contact with the outer surface of the rotor when the rotor is housed in the housing.

According to an embodiment, the shell comprises a first shell portion, a second shell portion and a fixing device, the first shell portion comprising a first part of the housing, typically a first part of the inner surface, and the second shell portion comprising a second part of the housing, typically a second part of the inner surface, the fixing device being configured to attach the first shell portion and the second shell portion so as to form the housing in an attached configuration of the shell. Such a shell is easy to manufacture and to install, each portion being arranged with its respective part of the housing, i.e. of the inner surface, applied against a respective part of the outer surface of the rotor and the fixing device being used to ensure the attachment of said shell portions together to maintain the rotor radially in the housing. In other words, the shell is a clamp having two clamping portions defining the housing cross-section in a closed configuration of the clamp.

According to an embodiment, each of the first shell portion and the second shell portion comprises a main portion, a first flange and a second flange, the main portion comprising the corresponding part of the housing, i.e. the corresponding part of the inner surface, the first flange and the second flange extending radially outward from opposite lateral ends of the main portion, the fixing device being configured to attach together corresponding first flange and second flange of the first shell portion and second shell portions in the attached configuration of the shell. In such an embodiment, the fixing device may be for instance screws and nuts passing through corresponding holes in the flanges, clamps or any other fixing device ensuring the flanges attachment.

According to an embodiment, the extraction device further comprises a base plate forming a bottom of the housing. Preferably, said base plate has a passage, said passage being configured to have, along the longitudinal direction, a cross section larger than the cross section of the magnet. In other words, the base plate supports the rotor stack during the magnet extraction. Thanks to such a base plate, the rotor integrity is maintained in the longitudinal direction when the needle is inserted in the slot of the rotor and the rotor is also maintained in position in the bottom part of the housing. Thus, the needle movement does not involve deformations of the bottom part of the rotor when extracting the magnet.

According to an embodiment, the extraction device further comprises a cover plate forming a top of the housing. Preferably, said cover plate has a top passage, said top passage being configured to have, along the longitudinal direction, a cross section larger than the cross section of the needle, the needle being in the starting position longitudinally in line with the top passage. Thanks to such a cover plate, the rotor integrity is maintained in the longitudinal direction when the needle is inserted in the slot of the rotor and the rotor is also maintained in position in the top part of the housing. Thus, the needle movement does not involve deformations of the top part of the rotor when extracting the magnet. Alternatively, the cover plate is applied to the top part of the rotor after the needle insertion in order to restore any potential deformation of said top part of the rotor after the needle insertion.

According to an embodiment, the needle is movable in a plan perpendicular to the longitudinal direction. Thanks to this feature, the needle may change its starting position to adapt the needle starting position to the magnet position, for instance to extract magnets from rotors having a plurality of magnets and/or magnets arranged in different positions.

According to an embodiment, the extraction device has a plurality of needles, each needle having a respective starting position and extracting position. In this case, the base plate, or the cover plate, has a plurality of passage, respectively a plurality of top passage, as described above.

According to an embodiment, the needle is inserted in the passage of the base plate in the extracting position.

According to an embodiment, the extraction device further includes an hydraulic press. Preferably, the needle is mounted on the hydraulic press so as to be movable from the starting position to the extraction position while applying on the magnet the force provided from the hydraulic press.

The invention also provides a method for extracting a magnet from a rotor, the magnet being arranged in a slot of the rotor, said slot extending from an upper face of the rotor to a bottom face of the rotor and having a constant cross-section along a longitudinal direction, the method comprising the steps of:
- inserting the rotor in the housing of an extraction device as above such that the needle is in the starting position and is in line, along the longitudinal direction, with the slot, and such that radially outward displacement of the rotor is blocked in the housing,
- moving the needle from the starting position to the extracting position such that the magnet is pushed out from the slot.

Thanks to this process, the magnet can be extracted from the rotor while the rotor integrity is radially maintained thanks to the housing, keeping the slot cross-section stable along the longitudinal direction and therefore allowing the magnet to be extracted without damage.

The method may have one or a plurality of the following features, alone or in combination.

According to an embodiment, the method further comprises a step of moving the needle in a plan perpendicular to the longitudinal direction from a first position to a second position, said second position corresponding to the starting position. The first position may be any position allowing the rotor to be inserted in the housing without interference with the needle. For instance, the first position of the needle can be a position arranged radially outward of the housing such that the rotor is simply inserted from above in the housing.

According to an embodiment, the method further comprises:
- bringing a first shell portion comprising the first part of the inner surface of the shell, i.e. a first part of the housing, in contact with a first part of the outer surface of the rotor;
- bringing a second shell portion comprising the second part of the inner surface of the shell, i.e. the second part of the housing, in contact with a second part of the outer surface of the rotor;
- attaching the first shell portion and the second shell portion together so as to form the housing in the attached configuration of the shell.

According to an embodiment, the method further comprises bringing in contact corresponding flanges of the first shell portion and the second shell portion and attaching said corresponding flanges together.

According to an embodiment, the method further comprises a step of covering the rotor with a cover plate such that a top passage of the cover plate is in line, along the longitudinal direction, with the needle in the starting position.

According to an embodiment, the method further comprises a step of inserting a central chock in a central hole of the rotor such that an inwardly displacement of the rotor is blocked by said chock.

According to an embodiment, the step of inserting the rotor in the housing comprises placing the slot in line, in the longitudinal direction, with a passage of a base plate.

According to an embodiment, the method further comprises a step of removing a protecting plate of an upper surface and/or a lower surface of the rotor.

According to an embodiment, the needle applies a pressure above 10 bar on the magnet to break the magnet embedding. Preferably, the pressure drops below 10 bar after having broken the magnet embedding.

According to an embodiment, the cover plate applies pressure on the top of the rotor. Thanks to this pressure, any deformation of the top of the rotor stack can be removed.

According to an embodiment, the step of moving the needle from the starting position to the extracting position is performed at room temperature.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a schematic view of a rotor stack having slots in which magnets are embedded;
- FIG.2 is a schematic view of the shell of an extraction device according to an embodiment of the invention;
- FIG.3 is a schematic view of the needle of an extraction device according to an embodiment of the invention;
- FIG.4 to Fig. 6 are schematic views of an extraction device according to an embodiment of the invention during a magnet extraction, said extraction device including a shell of figure 2 and a needle of figure 3.

### DETAILED DESCRIPTION OF EMBODIMENTS

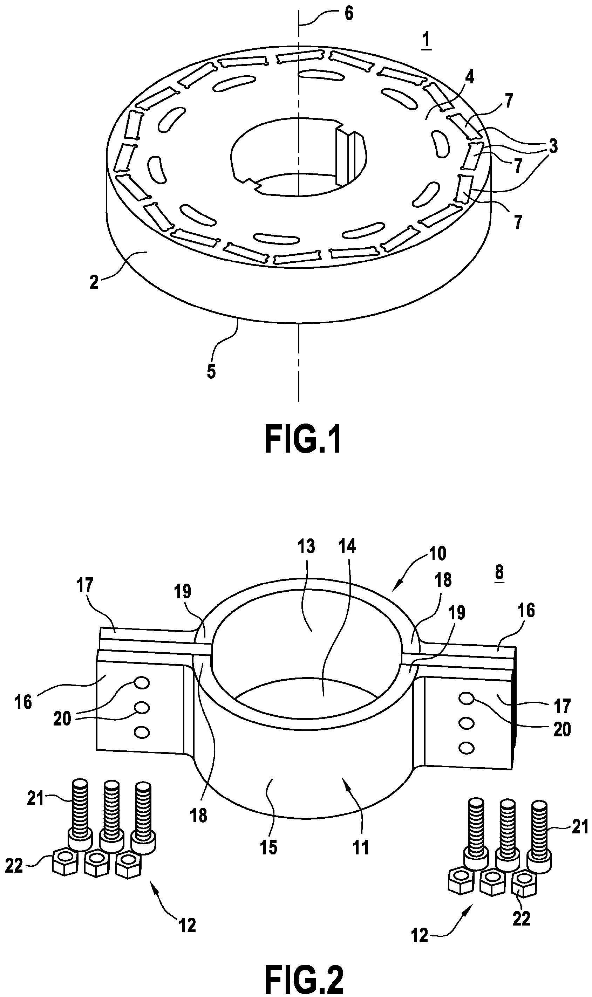

Figure 1 shows a rotor 1 of an electric motor for automotive. This rotor 1 has a cylindric shape. In the embodiment shown on figure 1, the rotor 1 has an outer surface 2 with a circular shape.

The rotor 1 has a plurality of slots 3 extending from an upper surface 4 of the rotor 1 to a lower surface 5 of the rotor 1. In other words, the slots 3 extend along the entire length, along a longitudinal direction 6, of rotor 1 and are opened on opposite sides of rotor 1.

The slots 3 have a constant cross-section along the longitudinal direction 6. In the embodiment shown on figure 1, said slot 3 cross-section is globally rectangular. The Slots 3 are circumferentially arranged around a central axis of the rotor 1, said central axis defining the longitudinal direction 6. The longitudinal axis 6 defines an axis of s symmetry of the rotor 1.

A respective magnet 7 is embedded in each slot 3. Magnets 7 have a shape corresponding to the slots 3 shapes. Magnets 7 are embedded within resin to be firmly fixed in rotor 1. According to embodiments, magnets 7 may be in a single piece extending longitudinally from the upper surface 4 to the lower surface 5 of the rotor 1 or in a plurality of magnet elements stacked and embedded together in the corresponding slots 3.

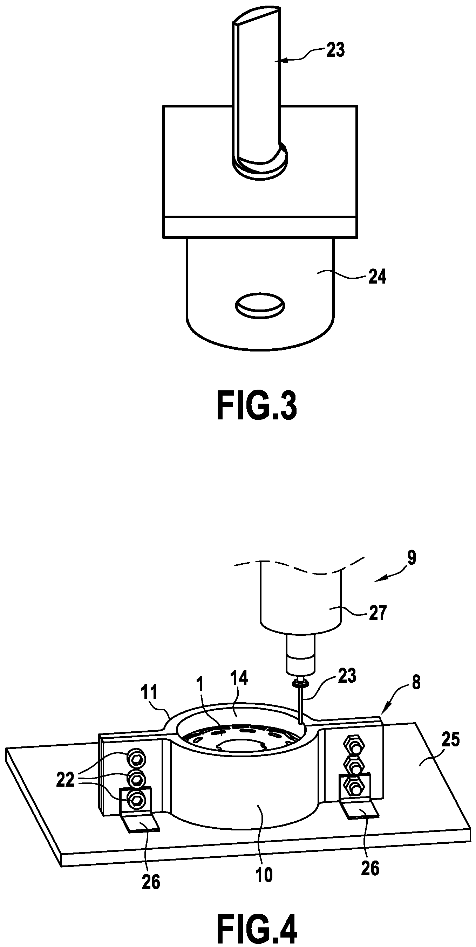

Figure 2 shows a shell 8 of an extraction device 9 (shown on figures 4 to 6) for extracting the magnets 7 from the rotor 1.

The shell 8 is a clamp comprising a first shell portion 10, a second shell portion 11 and fixing means 12. Each of the first and second shell portions 10 and 11 corresponds to a respective part of the clamp and is configured to surround the outer surface 2 of the rotor 1. The shell 8 has an inner surface 13 corresponding to the outer surface 2 of the rotor 1, said inner surface 13 defining a housing 14 for the rotor 1.

First and second shell portions 10 and 11 are identical and the description below of the first shell portion 10 applies to the second shell portion 11.

The first shell portion 10 comprises a main portion 15, a first flange 16 and a second flange 17. The main potion 15 forms a first part of the inner surface 13 of the shell 8. The main portion 15 has a semi-circular shape such that the first part of the inner surface 13 fit with half of the outer surface 2. The first flange 16 extends outward from a first lateral end 18 of the main portion 15. Similarly, the second flange 17 extends outward from a second lateral end 19 of the main portion 15, said second lateral end being opposed to the first lateral end 18. The First flange 16 and the second flange 17 are symmetrical with respect to the longitudinal axis 6 in an attached state of the shell, i.e. when the first and second shell portions 10 and 11 are attached together.

In the embodiment shown on figure 2, fixing means 12 comprises fixing holes 20 arranged on the first and second flanges 16 and 17, screws 21 and nuts 22. The first flange 16 of the first shell portion 10 and the second flange 17 of the second shell portion 11 are attached together, in the attached state of the shell 8, thanks to the screws 21 passing through the corresponding fixing holes 20 and cooperating with the nuts 22. Similarly, the first flange 16 of the second shell portion 11 and the second flange 17 of the first shell portion 10 are attached together, in the attached state of the shell 8, thanks to the screws 21 passing through the corresponding fixing holes 20 and cooperating with the nuts 22.

Figure 3 shows a needle 23 of the extraction device 9 used to push out the magnet 7 from the rotor 1, as explained below in view of figures 4 to 6.

The needle 23 has a shape corresponding to the shape of the slots 3. Especially, the needle 23 has a constant cross-section along the longitudinal direction 6. This cross-section of the needle 23 is smaller than the slot 3 cross-section and preferably equal to the magnet's 7 cross-section. The needle 23 is preferably longer than the slot 3 height, along the longitudinal direction 6.

The needle 23 comprises a mounting part 24 to be fixed on an hydraulic press 27 (see figures 4 to 6).

A method for extracting the magnet 7 from the rotor 1 is described in view of figures 4 to 6.

In order to extract a magnet 7 from rotor 1, said rotor 1 is placed on a base plate 25 of the extraction device 9. This base plate 25 comprises a passage (not shown) having a cross-section larger than the magnet 7 cross-section and the rotor is placed on said base plate 25 with the slot 3 in line, along the longitudinal direction 6, with said passage. This passage in the base plate is in line, along the longitudinal direction 6, with the needle 23 in its starting position (shown on figure 4). In other words, the rotor 1 is placed on the base plate 25 with the magnet 7 to extract between, along the longitudinal direction 6, the passage in the base plate 25 and the needle 23.

Then, the first and second shell portions 10 and 11 are placed around the outer surface 2 of the rotor 1. Especially, the first shell portion 10 is placed on the base plate 25 such that the inner surface of said first shell portion 10 is in contact with the outer surface 2 of the rotor. Then, said shell first portion 10 is fixed to the base plate 25, thanks to mounting brackets 26 on the embodiment shown on figure 4. The second shell portion 11 is placed on the base plate 25 such that its first and second flanges 16 and 17 are brought into contact with, respectively, the second and first flange 17 and 16 of the first shell portion 10 and that the inner surface of said second shell portion 11 is brought into contact with the outer surface 2 of the rotor 1. In other words, the first shell portion 10 and the second shell portion 11 are placed around the rotor 1 such that the outer surface 2 of the rotor 1 is fully surrounded and in contact with the inner surfaces 13 of said first and second shell portions 10 and 11.

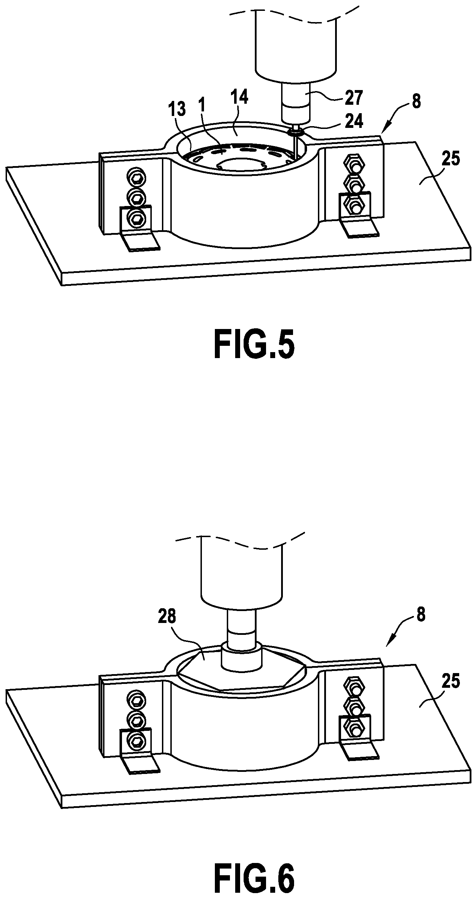

Screws 21 and nuts 22 are then used to attach and maintain together the first shell portion 10 and the second shell portion 11, i.e. to bring the shell 8 in its attached configuration. The hydraulic press 27 is triggered to move along the longitudinal direction 6 the needle 23 towards the base plate 25. As the needle 23 is in line along the longitudinal direction 6 with the magnet 7, this movement bring the needle in contact with the upper face of the magnet 7, or a part the embedding covering the magnet 7 if any. The needle 23 applies a force on the magnet 7. As the rotor 1 lays on the base plate 25 and is surrounded by the housing 14 of the shell 8, the pressure applied by the needle 23 does not involve a deformation of the rotor 1. Especially, the slot 3 in which is embedded the magnet 7 keeps its constant cross-sectional shape under the pressure applied by the needle 23 to the magnet 7. The pressure applied by the needle 23 breaks down the embedding and the movement of the needle 23 from the starting position shown on figure 4 to the extracting position shown on figure 5 pushes out the magnet 7 from the slot 3 rotor 1 through the passage in the base plate 25.

In the embodiment shown on figures, the shell 8 is higher than the rotor 1, along the longitudinal direction 6, and the mounting part 24 of the needle 23 bears against the upper side of the shell 8 in the extracting position of the needle 23. Preferably, in said extracting position, the needle 23 extends along the full length of the slot 3 such that the magnet 7 is fully pushed out from said slot 3.

Optionally, and as shown on figure 6, once the magnet 7 has been pushed out from the slot 3, the needle 3 may be removed and a cover plate 28 can be applied to the top part of the rotor 1 in order to restore any deformation which could have occurred in the upper part of the rotor 1 during the movement of the needle 23.

In a not shown embodiment, the cover plate comprises a top passage larger than the needle cross-section. Said cover plate is placed on the upper face of the rotor prior to the movement of the needle with the top passage in line with the passage of the base plate, the slot and the needle. During the movement of the needle, the needle pass through the top passage to apply the force on the magnet. Preferably, the cover plate also applies a force on the upper surface of the rotor during the movement of the needle.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense. As an example, the extraction device could have a plurality of needles 23 as described above. In such a configuration, the base plate has a plurality of passages and the rotor is placed on the base plate with a plurality of magnets between, along the longitudinal direction, a respective needle and a corresponding passage of the base plate, the extraction device extracting said plurality of magnets simultaneously.

## Claims

1. An extraction device (9) for extracting a magnet (7) from a rotor (1), the magnet (1) being arranged in a slot (3) of the rotor (1), said slot (3) extending between two opposite faces of the rotor (1) and having a constant cross-section along a longitudinal direction (6), the device comprising
- a shell (8) defining a housing (14), said housing (14) being configured to block a radial displacement of an outer surface (2) of the rotor (1) when the rotor (1) is arranged in the housing (14),
- a needle (23) configured to be inserted in the slot (3) and to apply on the magnet (7) a force with a longitudinal component, said needle (23) being longitudinally movable between a starting position outside the housing (14) and an extracting position inside the housing (14).

2. The extraction device (9) for extracting a magnet (7) from a rotor (1) according to claim 1, wherein the shell (8) comprises an inner surface (13) defining the housing (14), said inner surface (13) being configured to surround circumferentially the outer surface (2) of the rotor (1).

3. The extraction device (9) for extracting a magnet (7) from a rotor (1) according to claim 1 or 2, wherein the shell (8) comprises a first shell portion (10), a second shell portion (11) and a fixing device (12), the first shell portion (10) comprising a first part of the inner surface (13) and the second shell portion (12) comprising a second part of the inner surface (13), the fixing device (12) being configured to attach the first shell portion (10) and the second shell portion (11) so as to form the housing (14) in an attached configuration of the shell (8).

4. The extraction device (9) for extracting a magnet (7) from a rotor (1) according to claim 3, wherein each of the first shell portion (10) and the second shell portion (11) comprises a main portion (15), a first flange (16) and a second flange (17), the main portion (15) comprising the corresponding part of the inner surface (13), the first flange (16) and the second flange (17) extending radially outward from opposite lateral ends (18, 19) of the main portion (15), the fixing device (12) being configured to attach together corresponding first flange (16) and second flange (17) of the first shell portion (10) and second shell portion (11) in the attached configuration of the shell (8).

5. The extraction device (9) for extracting a magnet (7) from a rotor (1) according to any of claims 1 to 4, the extraction device (9) further comprising a base plate (25) forming a bottom of the housing (14), said base plate (25) having a passage, said passage being configured to have, along the longitudinal direction (6), a cross section larger than the cross section of the magnet (7).

6. The extraction device (9) for extracting a magnet (7) from a rotor (1) according to any of claims 1 to 5, the extraction device (9) further comprising a cover plate (28) forming a top of the housing (14), said cover plate (28) having a top passage, said top passage being configured to have, along the longitudinal direction (6), a cross section larger than the cross section of the needle (23), the needle (23) being in the starting position longitudinally in line with the top passage.

7. The extraction device (9) for extracting a magnet (7) from a rotor (1) according to any of claims 1 to 6, wherein the needle (23) is movable in a plan perpendicular to the longitudinal direction (6).

8. A method for extracting a magnet (7) from a rotor (1), the magnet (7) being arranged in a slot (3) of the rotor (1), said slot (3) extending from an upper face (4) of the rotor (1) to a bottom face (5) of the rotor (1) and having a constant cross-section along a longitudinal direction (6), the method comprising the steps of:
- inserting the rotor (1) in the housing (14) of an extraction device (9) as claimed in any of claims 1 to 7 such that the needle (23) is in the starting position and is in line, along the longitudinal direction (6), with the slot (3), and such that radially outward displacement of the rotor (1) is blocked in the housing (14),
- moving the needle (23) from the starting position to the extracting position such that the magnet (7) is pushed out from the slot (3).

9. The method for extracting a magnet (7) from a rotor (1) according to claim 8, further comprising the step of:
- bringing a first shell portion (10) comprising a first part of the inner surface (13) of the shell (8) in contact with a first part of the outer surface (2) of the rotor (1);
- bringing a second shell portion (11) comprising a second part of the inner surface (13) of the shell (8) in contact with a second part of the outer surface (2) of the rotor (1);
- attaching the first shell portion (10) and the second shell portion (11) together so as to form the housing (14) in the attached configuration of the shell (8)..

10. The method for extracting a magnet (7) from a rotor (1) according to claim 9, further comprising bringing in contact corresponding flanges (16, 17) of the first shell portion (10) and the second shell portion (11) and attaching said corresponding flanges (16, 17) together.

11. The method for extracting a magnet (7) from a rotor (1) according to any of claims 8 to 10, further comprising a step of covering the rotor (1) with a cover plate (28) such that a top passage of the cover plate (28) is in line, along the longitudinal direction (6), with the needle (23) in the starting position.

12. The method for extracting a magnet (7) from a rotor (1) according to any of claims 8 to 11, further comprising a step of inserting a central chock in a central hole of the rotor (1) such that an inwardly displacement of the rotor (1) is blocked by said chock.

13. The method for extracting a magnet (7) from a rotor (1) according to any of claims 8 to 12, wherein the step of moving the needle (23) from the starting position to the extracting position is performed at room temperature.

## Amended claims

### Amended claims in accordance with Rule 137(2) EPC.

1. An extraction device (9) for extracting a magnet (7) from a rotor (1), the magnet (1) being arranged in a slot (3) of the rotor (1), said slot (3) extending between two opposite faces of the rotor (1) and having a constant cross-section along a longitudinal direction (6), the device comprising
- a shell (8) defining a housing (14), said housing (14) being configured to block a radial displacement of an outer surface (2) of the rotor (1) when the rotor (1) is arranged in the housing (14),
- a needle (23) configured to be inserted in the slot (3) and to apply on the magnet (7) a force with a longitudinal component, said needle (23) being longitudinally movable between a starting position outside the housing (14) and an extracting position inside the housing (14)
**characterized in that** the shell (8) comprises a first shell portion (10), a second shell portion (11) and a fixing device (12), the first shell portion (10) comprising a first part of the inner surface (13) and the second shell portion (12) comprising a second part of the inner surface (13), the fixing device (12) being configured to attach the first shell portion (10) and the second shell portion (11) so as to form the housing (14) in an attached configuration of the shell (8).

2. The extraction device (9) for extracting a magnet (7) from a rotor (1) according to claim 1, wherein the shell (8) comprises an inner surface (13) defining the housing (14), said inner surface (13) being configured to surround circumferentially the outer surface (2) of the rotor (1).

3. The extraction device (9) for extracting a magnet (7) from a rotor (1) according to claim 1 or 2, wherein each of the first shell portion (10) and the second shell portion (11) comprises a main portion (15), a first flange (16) and a second flange (17), the main portion (15) comprising the corresponding part of the inner surface (13), the first flange (16) and the second flange (17) extending radially outward from opposite lateral ends (18, 19) of the main portion (15), the fixing device (12) being configured to attach together corresponding first flange (16) and second flange (17) of the first shell portion (10) and second shell portion (11) in the attached configuration of the shell (8).

4. The extraction device (9) for extracting a magnet (7) from a rotor (1) according to any of claims 1 to 3, the extraction device (9) further comprising a base plate (25) forming a bottom of the housing (14), said base plate (25) having a passage, said passage being configured to have, along the longitudinal direction (6), a cross section larger than the cross section of the magnet (7).

5. The extraction device (9) for extracting a magnet (7) from a rotor (1) according to any of claims 1 to 4, the extraction device (9) further comprising a cover plate (28) forming a top of the housing (14), said cover plate (28) having a top passage, said top passage being configured to have, along the longitudinal direction (6), a cross section larger than the cross section of the needle (23), the needle (23) being in the starting position longitudinally in line with the top passage.

6. The extraction device (9) for extracting a magnet (7) from a rotor (1) according to any of claims 1 to 5, wherein the needle (23) is movable in a plan perpendicular to the longitudinal direction (6).

7. A method for extracting a magnet (7) from a rotor (1), the magnet (7) being arranged in a slot (3) of the rotor (1), said slot (3) extending from an upper face (4) of the rotor (1) to a bottom face (5) of the rotor (1) and having a constant cross-section along a longitudinal direction (6), the method comprising the steps of:
- inserting the rotor (1) in the housing (14) of an extraction device (9) as claimed in any of claims 1 to 6 such that the needle (23) is in the starting position and is in line, along the longitudinal direction (6), with the slot (3), and such that radially outward displacement of the rotor (1) is blocked in the housing (14),
- moving the needle (23) from the starting position to the extracting position such that the magnet (7) is pushed out from the slot (3),
the method further comprising the step of:
- bringing a first shell portion (10) comprising a first part of the inner surface (13) of the shell (8) in contact with a first part of the outer surface (2) of the rotor (1);
- bringing a second shell portion (11) comprising a second part of the inner surface (13) of the shell (8) in contact with a second part of the outer surface (2) of the rotor (1);
- attaching the first shell portion (10) and the second shell portion (11) together so as to form the housing (14) in the attached configuration of the shell (8)..

8. The method for extracting a magnet (7) from a rotor (1) according to claim 7, further comprising bringing in contact corresponding flanges (16, 17) of the first shell portion (10) and the second shell portion (11) and attaching said corresponding flanges (16, 17) together.

9. The method for extracting a magnet (7) from a rotor (1) according to claim 7 or 8, further comprising a step of covering the rotor (1) with a cover plate (28) such that a top passage of the cover plate (28) is in line, along the longitudinal direction (6), with the needle (23) in the starting position.

10. The method for extracting a magnet (7) from a rotor (1) according to any of claims 7 to 9, further comprising a step of inserting a central chock in a central hole of the rotor (1) such that an inwardly displacement of the rotor (1) is blocked by said chock.

11. The method for extracting a magnet (7) from a rotor (1) according to any of claims 7 to 10, wherein the step of moving the needle (23) from the starting position to the extracting position is performed at room temperature.
